# EUROPEAN PATENT SPECIFICATION

(11) **EP 2 791 468 B1**
(45) Date of publication and mention of the grant of the patent: **18.11.2015**
(21) Application number: 12820964.0
(22) Date of filing: 12.12.2012
(51) Int. Cl.: F01B 3/04, F01B 9/06, F02B 75/32

(54) **CAM FOLLOWER WITH AN ANGLED AXIS OF ROTATION**
NOCKENFOLGER MIT ABGEWINKELTER ROTATIONSACHSE
CONTRE-CAME AVEC AXE DE ROTATION EN ANGLE

(30) Priority: 16.12.2011 NL 2007988
(43) Date of publication of application: 22.10.2014
(73) Proprietor: Griend Holding B.V., 3295 KV 's-Gravendeel (NL)
(72) Inventor: VAN DEN BRINK, Christopher Ralph, NL-3297AA Puttershoek (NL); KROONEN, Hendrik Marinus, NL-3331AM Zwijndrecht (NL)
(74) Representative: Nederlandsch Octrooibureau
(86) International application number: PCT/NL2012/050880
(87) International publication number: WO 2013/095112

(56) References cited:
- WO-A2-2006/133452
- WO-A2-2012/168696
- GB-A- 117 487
- GB-A- 425 112
- US-A- 1 375 140
- US-A- 3 598 094

## Description

### Field of the invention

The invention relates to a rotary drive member comprising a longitudinal axis defining a length direction, a curved cam contact surface forming a closed contour around the longitudinal axis and extending in the length direction, a reciprocating member having a carrier movable in the length direction, at least one cam follower wheel being rotatably mounted on the carrier via a cam follower axis that extends in a direction transverse to the length direction and that is oriented at an angle α with respect to the transverse direction, the wheel having a wheel contact surface engaging with the cam contact surface for rolling along the cam contact surface and driving the cam contact surface in rotation around the longitudinal axis, wherein the cam contact surface is oriented substantially in the transverse direction.

### Background of the invention

In such a drive system, the rotating cam in combination with cam rollers transforms an oscillating linear motion of a piston into a rotary motion of the cam surface. It is known to apply such a drive system in a generator, a combustion engine, energy converter, or a hybrid drive (combined generator/engine), for instance from prior art references U.S.1339276, U.S.1352985, U.S.1788140 and U.S.5375567.

In EP 2 138 687 it is described that the reciprocating member comprises a piston and the rotating cam drives a coil for generating electrical power. In these known drive systems, a rotating cam element in combination with rollers is used to translate the rotating movement of the cam into a translating movement to propel the pistons and conversely. It is known that the inside edge of the rollers, which is closest to the central, longitudinal axis, has to travel a shorter distance than the outside edge that is situated further away from the central axis. It is known that in order to improve the durability and performance of the rollers, these rollers are provided with a tapered shape so that the wheels do not slip when traveling along the curved path of the cam surface. By providing the roller wheels with a larger diameter on the outside and a smaller diameter on the inside of the tapered rollers during rotation will effectuate the roller wheels to run along a near perfect circular path, so that no slip occurs when the wheels roll along the curved cam surface. In order to have a line contact rather than a point contact between the rotating cam and the wheel contact surface of the rollers, it is known to orient the rotating cam surface an angle that matches the tapered rollers.

It is known that if the tapered rollers of the cam follower, in combination with the rollers axes and driver, move radially compared to cam surface (i.e. towards and away from the central, longitudinal axis), the clearance between the rollers and the cam surface of the rotating cam will change. Radial movement of the rollers away from the central axis, to the outside of the cam surface causes rattle and power losses and deterioration of the durability and performance of the rollers and cam. Movement towards the central axis will cause too much preloading and deterioration of the durability and performance and might result in a jam of the cam surface and rollers.

It is known that during operation the tapered wheels are mainly axially loaded against the rotating cam surface. Because of the angle of the surface of the rotating cam, radial forces relative to the rotating cam are generated. This causes the carrier on which the rollers are mounted to be squeezed in a radial direction whereby the longitudinal guide of the carrier will face an extra load that causes deterioration of the durability and performance. This force will also create unnecessary play.

In case the wheels are being mounted on the inside off the rotating cam, the assembly of the tapered wheel combined with the driver will be relatively difficult.

The angled axes or shafts on which the cam follower rollers are mounted on the carrier, avoid in the event of radial movement of a roller compared to the cam surface, that clearance between the wheels and the cam surface changes and hence undesired play or jamming is avoided.

By applying angled shafts on which the rollers are mounted on the carrier, in the event of axial loads on the rollers, no radial forces will be induced on the carrier and in the event of assembly or disassemble of the drive system the roller assembly can easily be mounted.

US patent 1,375,140 discloses an internal combustion engine in which reciprocation of the pistons is converted into rotary motion of the shaft by cooperarion of angled rollers carried by the pistons with a rib formed upon the periphery of a rotor. In order to provide a true rolling motion of the rollers along the ribit is essential that the rollers are adjusted accurately upon the cam rib. To this end, conical rollers are provided supported on each side by a thrust-bearing that is adjustable via a screw. The thrust bearings may be formed by ball bearings or an oil film.

It is an objective of the invention to provide a drive system of the above described type in which the rollers move along a curved trajectory on the cam contact surface whereby changes in play between the rollers and the cam during radial movements relative to the rotating cam element of the rollers can be easily taken up.

It is a further objective of the invention to eliminate radial forces generated by the cam surface while minimizing energy losses and play.

It is again an object of the invention to provide a drive system in which the compression force of the wheel contact surface against the cam surface can be easily adjusted.

Finally, the drive system according to the invention should allow easy construction and disassembly and mounting of the cam and wheels for instance for maintenance or repair.

### Summary of the invention

To this end the drive system according to the invention is characterized in that a fluid supply duct extends through the cylindrical body and connects a fluid pressure source to a space between the transverse end part and ring-shaped wheel for axially displacing the cylindrical body relative to the wheel.

By providing adjustability of the axial position of the rollers on their shaft driven by the oil pressure, it is possible to easily and accurately adjust the play between the rollers and the cam surface. This adjustment can be done during operation of the drive system by adjusting the oil pressure in the fluid supply duct. If sufficient oil pressure is applied the play will be always zero.

By applying a check valve situated in the cylindrical body and into the fluid duct leading to the wheel to adjust the axial position, the oil supply pressure can be kept low and can also create a desired amount of preload of the rollers on the cam contact surface. During full axial loads on the roller, its axial positioning cylinder is prevented from moving back by the check valve. The oil pressures will feed and only adjusts the axial position cylinder when the roller is not fully loaded up until there is no play between the roller and the cam surface.

In order to transport oil from the main support structure into the linear reciprocating carrier on which the roller axles are mounted, an oil filled sealed slot is created on the main support structure that is so positioned to always supply the oil intake hole of the carrier with oil. In a likewise alternative version the slot can also be located in the carrier and the exit hole in the main support structure.

### Brief description of the drawings

A number of embodiments of a rotary drive member in accordance with the invention will by way of non-limiting example be described in detail in relation with the enclosed drawings. In the drawings:
Fig. 1 shows a known drive system with tapered rollers according to the prior art, the cam follower axes of the rollers being perpendicular to the length direction,
Fig. 2 shows a partially cut-away perspective view of the drive system according to the invention having the cam follower axis of the rollers at a non-perpendicular angle to the length direction, the carrier assembly being situated externally from the cam surface,
Fig. 3 shows a partially cut-away perspective view of another embodiment of a drive system according to the invention, the carrier assembly being situated within the cam surface,
Fig 4 shows a cross-sectional view of tapered rollers,
Fig 5 shows a cross-sectional view of curved rollers,
Fig 6 shows a cross-sectional view of rollers, the cam follower surface being adjustable in the transverse direction via a washer,
Fig 7 shows a cross-sectional of a roller, the cam follower surface being adjustable by oil pressure, in accordance with the present invention
Fig 8 shows a cross-sectional top-view of rollers assembled in their carrier, and
Fig 9 shows another direction cut-away of the main linear support structure along the line A-A in fig 3 having 4 sets of roller assemblies.

### Detailed description of the invention

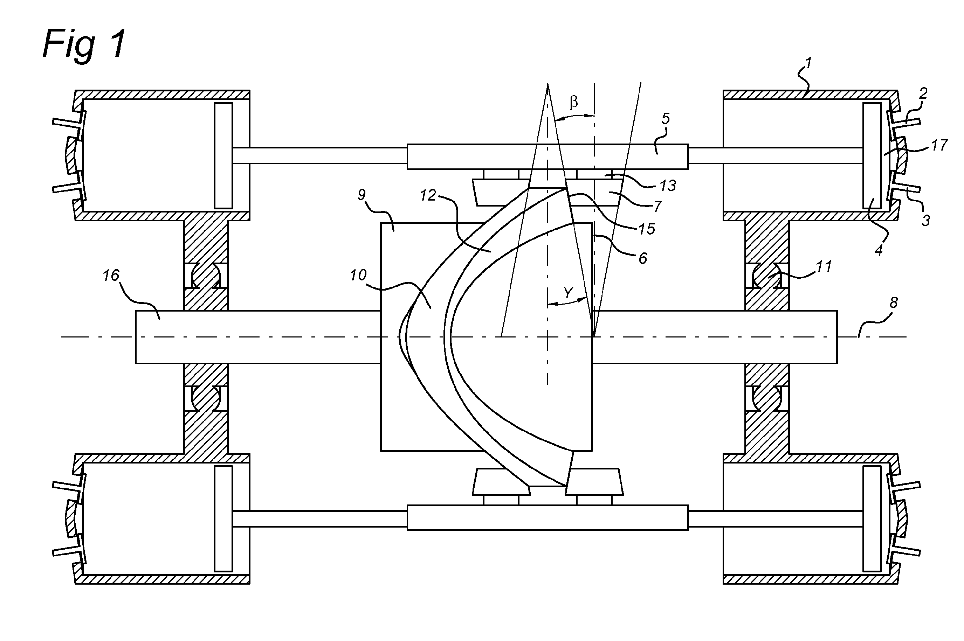

Fig.1 shows a known embodiment of the rotary drive system according to US 1339276, comprising one or more cylinders 1 in which there is an intake valve 2 and a outlet valve 3. Inside the cylinder 1 is a piston 4 that can oscillate and to which a carrier or driver 5 is connected. On the driver 5, two cam follower axes or roller axles 13 are mounted. Each roller axle 13 carries a roller 7 that can rotate around the roller axle 13. These rollers 7 are tapered and are mounted with the side of their smallest diameter r1 oriented to the center of the rotating cam axis 8. Between the two rollers 7 a cam 9 is placed with a cam track 10 is facing outwardly. This cam 9 is connected by bearings 11 and can rotate around the rotating cam axis 8. On this cam 9 the cam track surface 12 is at an angle γ to the transverse direction, which angle matches the roller taper angle β in other to have a contact line 15 between the cam track surface 12 and the roller 7. The cam shaft 16 can be rotationally connected to a device that is to be driven in rotation around the axis 8. This device can for instance comprise a generator or a gearbox. This cam 9 is also used as flywheel. When the cam 9 rotates around the longitudinal cam axis 8, the piston 4 will make an oscillating movement.

A fuel-air mixture is delivered to the central combustion chamber 17 via the open Intake valve 2 when the piston 4 retracts from the cylinder 1. Following the compression stroke, the intake valve 2 is closed and the fuel-air mixture is compressed. Near the end of the compression stroke, the fuel-air mixture is burned causing the gas to expand. During the expansion stoke the burned gasses propel the piston 4. During the exhaust stroke the combustion gases are expelled through the opened outlet valve 3.

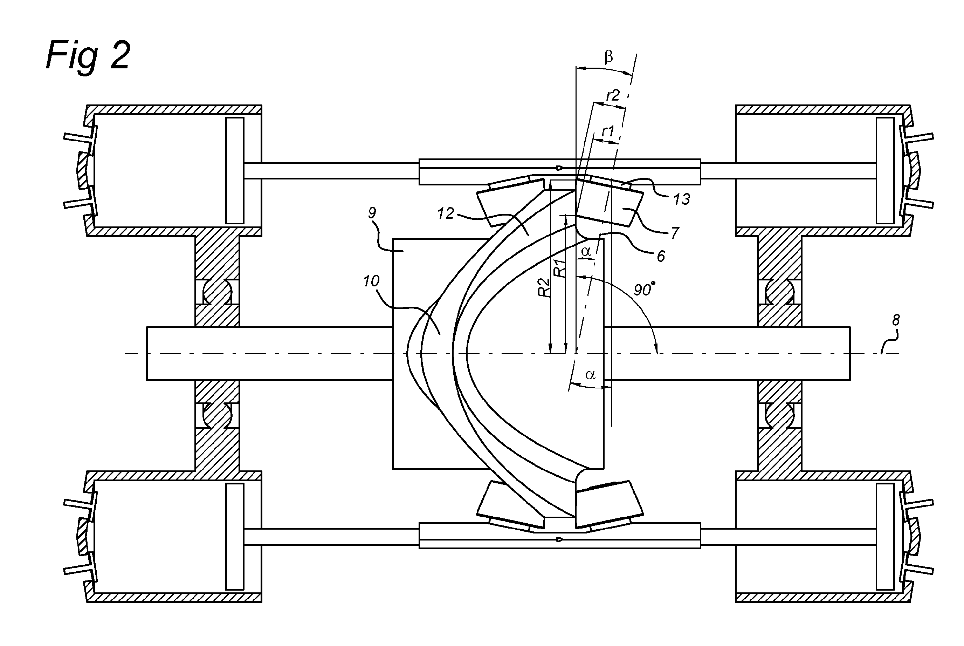

Fig. 2 shows the drive member according to the invention applied on a cam engine whereby the cam track 10 is accessed on the outside of the cam 9. The roller axels 13 are mounted at an angle α and support the tapered rollers 7. The rollers have a roller taper angle β. Between the two rollers 7, the cam track 10 is situated. The cam track surface 12 is perpendicular to the longitudinal axis 8.

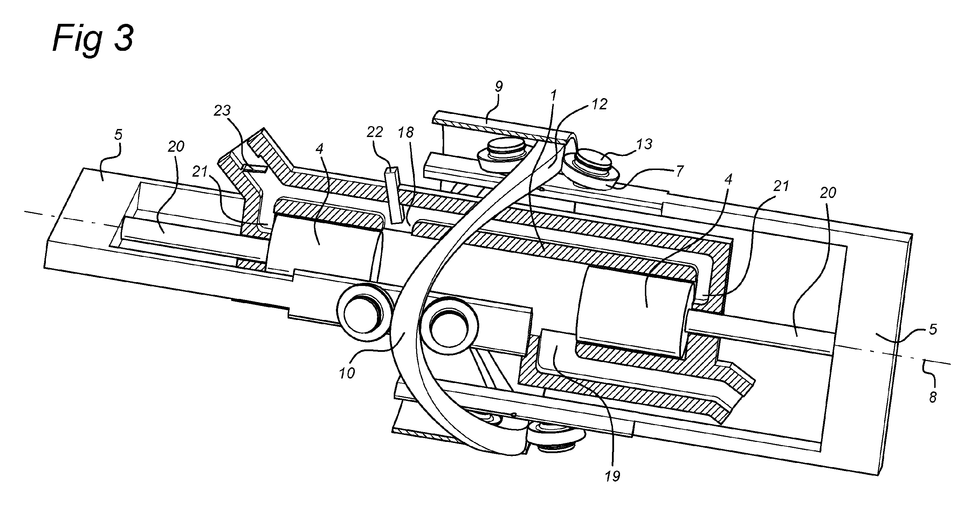

Fig. 3 shows a drive member according to the invention applied on a cam engine whereby the cam track 10 is driven from the inside. A cylinder 1 that has an inlet port 18 and an outlet port 19 is located within the closed contour of the cam 9. Two pistons 4 can move coaxially in opposing directions within the cylinder 1. The drive rod 20 of each piston 4 is connected to a driver 5 that is displaced in oscillation in the direction of the longitudinal axis 8 by the drivers 5. Each driver 5 can move in a linear fashion between its linear displacement support structures. On the driver 5, four roller shafts13 are mounted in pairs at an angle α to support the tapered cam follower rollers 7. The tapered cam follower rollers 7 have a taper angle β. Between the two rollers 7, the cam track 10 is placed. The rollers 7 follow the cam track 10 causing the driver 5, the drive rod 20, and the piston 4 to move in an oscillating manner. When both pistons 4 are traveling to their most opposite positions, the gas behind both cylinders in the back chamber 21 will be compressed. Just before both pistons 4 reach their most opposite position, the outlet port 19 will open allowing the exhaust gas to exit. Following the intake port 18 will open, letting the compressed fresh air behind the piston into to the cylinder 1. This compressed fresh air presses the exhaust gas out of the cylinder 1. Fuel is being injected by the injector 22 to the intake gas. When the pistons 4 moves towards each other, the inlet port 18 and the outlet port 19 will close and the gas will be compressed. During the compression stroke inside the back chamber 21, a reduced pressure will be created. This will open the reed valve 23 letting fresh outside air in.

Near the end of the compression stroke, the fuel-air mixture is ignited and burned causing the gas inside the cylinder 1 to expand. During the expansion stroke the burned gasses propel the pistons 4. This cycle is repeated constantly at a frequency of for instance between 100 and 10.000 RPM.

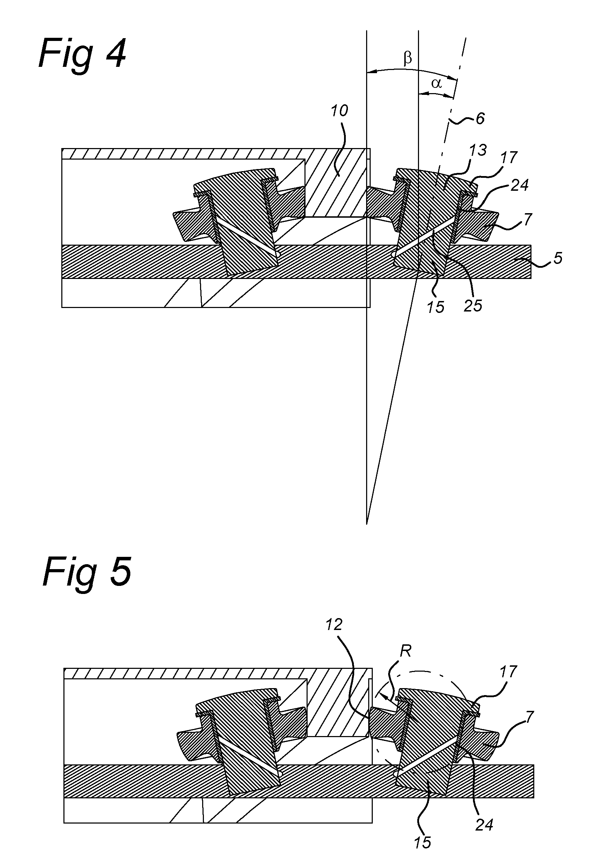

Fig. 4 shows a detailed partially cut-away view of driver 5 with two cylindrical bodies 15 of roller shafts 13 mounted in pairs at an angle α to support the tapered cam rollers 7 on a cam engine whereby the cam track 10 is accessed from the inside. The tapered cam rollers 7 have a taper angle β. The tapered cam rollers 7 have a slide bearing 24.

The slide bearing is supplied with oil through the oil feed duct 25 for lubrication. Between the two rollers 7 the cam track 10 is encased.

Fig. 5 shows a detailed view wherein the rollers 7 have a convex wheel contact surface 12.

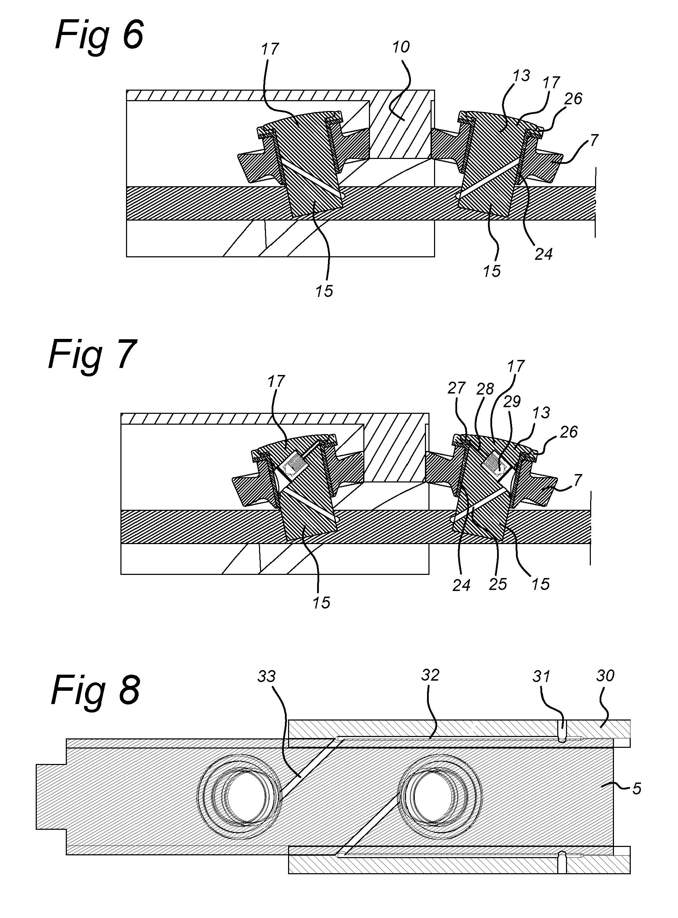

Fig. 6 shows a detailed view wherein the play between the rollers 7 and the cam track 10 can be adjusted by placing a washer 26 between the cam roller 7 and the thrust end of the roller shaft 13.

Fig. 7 shows a detailed view wherein the washer 26 in combination with the transverse end 17 of the cylindrical body 15 of the roller shaft 13 creates an oil chamber 27 forming a hydraulic actuator. A sleeve 25 is placed around the cylindrical body 15 and closes off the oil chamber 27. If oil is pressed through the oil ducts 25, 28 into the oil chamber 27, the washer 26 will lift from the thrust end and change the axial end position of the roller 7. When the roller 7 is moved axially, the play between the cam track 10 and the cam roller 7 will be adjusted to a minimum. Also a detailed view is shown wherein a check valve 29 is mounted into the oil duct 28 in order to discourage backflow of oil in case the oil pressure in the cylinder oil chamber 27 raises above the oil supply pressure because of the roller load.

Fig. 8 shows a detailed view wherein the driver 5 can move linearly between its linear displacement support structures 30. The linear displacement support 30 is fixed to the cylinder 1 ground support structure. Oil is supplied into the oil holes 31 to the linear displacement support structure 30 where it fills the oil slot 32. A part of the oil supply is used to lubricate the linear displacement support 30. The driver 5 is provided with oil channels 33 leading to the oil slot 32 into which the oil is pressed. The oil channels 33 are connected with the oil ducts in the roller shafts 25. A part of this oil supply lubricates the bearing 24. A part of the oil supply feeds the hydraulic cylinder oil chamber 27 to adjust the play.

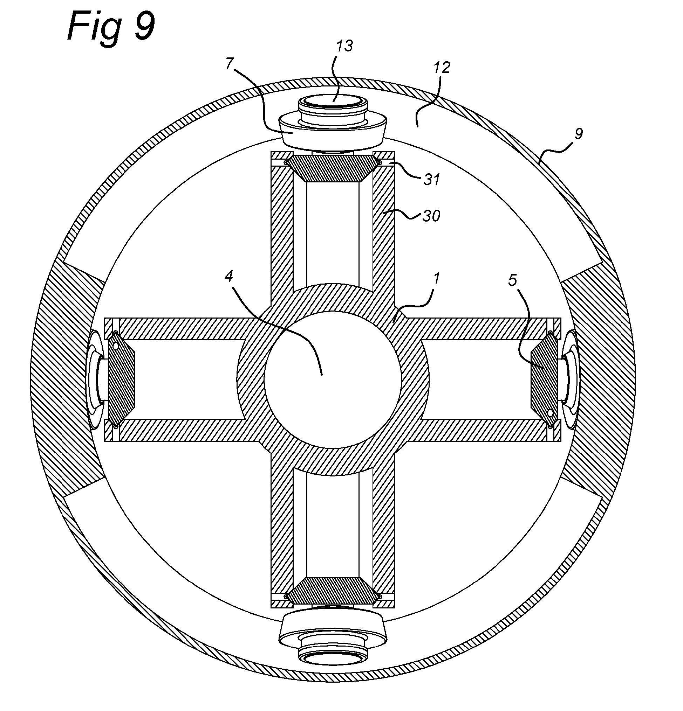

Fig. 9 finally shows the driver 5 and its linear displacement support 30 that is combined with the cylinder 1 and their oil intake holes 31 to supply the oil into the drive system.

## Claims

1. Rotary drive member comprising a longitudinal axis (8) defining a length direction, a curved cam contact surface (12) forming a closed contour around the longitudinal axis and extending in the length direction, a reciprocating member (4) having a carrier (5) movable in the length direction, at least one cam follower wheel (7) being rotatably mounted on the carrier via a cam follower axis (6) that extends in a direction transverse to the length direction and that is oriented at an angle α with respect to the transverse direction , the wheel having a wheel contact surface engaging with the cam contact surface (12) for rolling along the cam contact surface and driving the cam contact surface in rotation around the longitudinal axis (8), wherein the cam contact surface is oriented substantially in the transverse direction, wherein the cam follower axis (6) comprises a cylindrical body and a transverse end part (17), the wheel contact surface being part of a ring-shaped wheel mounted around the cylindrical body (15) and displaceable in an axial direction of said cylindrical body, **characterized in that** a fluid supply duct (25,28) extends through the cylindrical body (15) and connects a fluid pressure source to a space between the transverse end part (17) and the ring-shaped wheel (7) for axially displacing the cylindrical body (15) relative to the wheel (7), the fluid supply duct (28) comprising a check valve (29) situated in the cylindrical body.

2. Rotary drive member according to claim 1, wherein the carrier (5) comprises two opposed longitudinal sides, each side supported by a slide bearing (30) extending in the length direction, an oil supply (31) being connected to the slide bearing and ending in a gap (32) between the slide bearing and the longitudinal side, an oil connection path (33) being provided in the carrier (5) between the longitudinal side and the fluid supply duct (28) in the cylindrical body (15).

3. Rotary drive member according to claim 1 or 2, a sleeve being situated around the cylindrical body (15), a thrust chamber (27) being formed in the cylindrical body, bounded on one side by the sleeve, the fluid supply duct (28) connecting the fluid pressure source to the thrust chamber (27).

4. Rotary drive member comprising a spacer ring (26) that is situated at least partly around the cylindrical body between a top surface of the ring-shaped wheel and the transverse end part.

## Patentansprüche

1. Drehantriebsorgan, umfassend eine Längsachse (8), welche eine Längsrichtung definiert, eine gekrümmte Nockenkontaktfläche (12), welche eine geschlossene Kontur um die Längsachse bildet und sich in die Längsrichtung erstreckt, ein sich hin- und herbewegendes Glied (4) mit einem Träger (5), welcher in die Längsrichtung bewegbar ist, mindestens ein Nockenfolgerad (7), welches drehbar auf dem Träger mittels einer Nockenfolgeachse (6), die sich in eine Richtung transversal zur Längsrichtung erstreckt und die in einem Winkel α zu der transversalen Richtung ausgerichtet ist, montiert ist, wobei das Rad eine Radkontaktfläche umfasst, welche mit der Nockenkontaktfläche (12) ineinandergreift, um entlang der Nockenkontaktfläche zu rollen und die Nockenkontaktfläche in rotierender Weise um die Längsachse (8) anzutreiben, wobei die Nockenkontaktfläche im Wesentlichen in die transversale Richtung ausgerichtet ist, wobei die Nockenfolgeachse (6) einen zylindrischen Körper und ein transversales Endstück (17) umfasst, und die Radkontaktfläche Teil eines ringförmigen Rades ist, welches um den zylindrischen Körper (15) herum montiert ist und welches in eine axiale Richtung des genannten zylindrischen Körpers verschiebbar ist, **dadurch gekennzeichnet, dass**
ein Flüssigkeitsversorgungskanal (25, 28) sich durch den zylindrischen Körper (15) erstreckt und eine Flüssigkeitsdruckquelle mit einem Raum zwischen dem transversalen Endstück (17) und dem ringförmigen Rad (7) verbindet, um den zylindrischen Körper (15) relativ zu dem Rad (7) axial zu verdrängen, wobei der Flüssigkeitsversorgungskanal (28) ein Rückschlagventil (29) umfasst, welches sich im zylindrischen Körper befindet.

2. Drehantriebsorgan nach Anspruch 1, wobei der Träger (5) zwei gegenüberliegende Längsseiten umfasst, wobei jede Seite von einem Gleitlager (30), das sich in Längsrichtung erstreckt, gelagert wird, wobei eine Ölversorgung (31) an das Gleitlager angeschlossen ist und in einer Lücke (32) zwischen dem Gleitlager und der Längsseite endet, und wobei ein Ölversorgungspfad (33) im Träger (5) zwischen der Längsseite und dem Flüssigkeitsversorgungskanal (28) im zylindrischen Körper (15) bereitgestellt wird.

3. Drehantriebsorgan nach Anspruch 1 oder 2, wobei eine Hülle um den zylindrischen Körper (15) herum angeordnet ist, und wobei eine Brennkammer (27) im zylindrischen Körper gebildet wird, welche auf einer Seite durch die Hülle begrenzt wird, wobei der Flüssigkeitsversorgungskanal (28) die Flüssigkeitsdruckquelle mit der Brennkammer (27) verbindet.

4. Drehantriebsorgan, umfassend einen Distanzring (26), welcher zumindest teilweise um den zylindrischen Körper zwischen einer Oberseite des ringförmigen Rades und dem transversalen Endstück angeordnet ist.

## Revendications

1. Élément d'entraînement rotatif comprenant un axe longitudinal (8) définissant une direction de longueur, une surface de contact de came incurvée (12) formant un contour fermé autour de l'axe longitudinal et s'étendant dans la direction de longueur, un élément à mouvement alternatif (4) ayant un support (5) mobile dans la direction de longueur, au moins une roue de galet de came (7) étant montée en rotation sur le support par l'intermédiaire d'un axe de galet de came (6) qui s'étend dans une direction transversale à la direction de longueur et qui est orienté selon un angle α par rapport à la direction transversale, la roue ayant une surface de contact de roue venant en prise avec la surface de contact de came (12) pour rouler le long de la surface de contact de came et entraîner la surface de contact de came en rotation autour de l'axe longitudinal (8), dans lequel la surface de contact de came est orientée sensiblement dans la direction transversale, dans lequel l'axe de galet de came (6) comprend un corps cylindrique et une partie d'extrémité transversale (17), la surface de contact de roue faisant partie d'une roue de forme annulaire montée autour du corps cylindrique (15) et pouvant se déplacer dans une direction axiale dudit corps cylindrique, **caractérisé en ce qu'**un conduit d'alimentation en fluide (25, 28) s'étend à travers le corps cylindrique (15) et relie une source de pression de fluide à un espace entre la partie d'extrémité transversale (17) et la roue de forme annulaire (7) pour déplacer axialement le corps cylindrique (15) par rapport à la roue (7), le conduit d'alimentation en fluide (28) comprenant un clapet anti-retour (29) située dans le corps cylindrique.

2. Élément d'entraînement rotatif selon la revendication 1, dans lequel le support (5) comprend deux côtés longitudinaux opposés, chaque côté supporté par un palier de glissement (30) s'étendant dans la direction de longueur, une alimentation en huile (31) étant reliée au palier de glissement et se terminant dans un écart (32) entre le palier de glissement et le côté longitudinal, un trajet de raccord d'huile (33) étant prévu dans le support (5) entre le côté longitudinal et le conduit d'alimentation en fluide (28) dans le corps cylindrique (15).

3. Élément d'entraînement rotatif selon la revendication 1 ou 2, un manchon étant situé autour du corps cylindrique (15), une chambre de combustion (27) étant formée dans le corps cylindrique, liée sur un côté par le manchon, le conduit d'alimentation en fluide (28) reliant la source de pression de fluide à la chambre de combustion (27).

4. Élément d'entraînement rotatif comprenant une bague d'espacement (26) qui est située au moins en partie autour du corps cylindrique entre une surface supérieure de la roue de forme annulaire et la partie d'extrémité transversale.
